# EUROPEAN PATENT SPECIFICATION

(11) **EP 3 564 618 B1**
(45) Date of publication and mention of the grant of the patent: **11.05.2022**
(21) Application number: 19166982.9
(22) Date of filing: 03.04.2019
(51) Int. Cl.: G01B 11/00, G01B 11/24, G01B 21/04

(54) **THREE-DIMENSIONAL SHAPE MEASURING SYSTEM AND MEASURING TIME SETTING METHOD**
DREIDIMENSIONALES FORMMESSSYSTEM UND MESSZEITEINSTELLVERFAHREN
SYSTÈME DE MESURE DE FORME TRIDIMENSIONNELLE ET PROCÉDÉ DE RÉGLAGE DU TEMPS DE MESURE

(30) Priority: 02.05.2018 JP 2018088540
(43) Date of publication of application: 06.11.2019
(73) Proprietor: OMRON Corporation, Shiokoji-dori, Shimogyo-ku Kyoto-shi Kyoto 600-8530 (JP)
(72) Inventor: Wazumi, Minami, Kyoto-shi, Kyoto 600-8530 (JP); Kimura, Kazuya, Kyoto-shi, Kyoto 600-8530 (JP); Hayakawa, Masayuki, Kyoto-shi, Kyoto 600-8530 (JP)
(74) Representative: Kilian Kilian & Partner

(56) References cited:
- EP-A1- 2 400 261
- US-A1- 2014 046 589
- US-A1- 2015 323 308
- US-A1- 2017 261 315
- US-A1- 2017 299 379

## Description

### BACKGROUND OF THE INVENTION

### Field of the Invention

The present invention relates to a three-dimensional shape measuring system and a measuring time setting method.

### Description of Related Art

Conventionally, there have been proposed such a three-dimensional shape measuring system that is configured to use a laser probe including a laser irradiation part configured to irradiate a surface of a measurement target with a laser and a laser imaging part configured to capture an image of the laser irradiated onto the surface of the measurement target, and a probe including a plurality of light-emitting diode (LED) markers having a fixed position relationship with respect to the laser probe to measure a three-dimensional shape of the measurement target (see JP 6043974 B2, for example). The three-dimensional shape measuring system includes a first imaging device configured to detect positions in an x direction of the markers, a second imaging device configured to detect positions in a z direction of the markers, and a third imaging device configured to detect positions in a y direction of the markers. The three-dimensional shape measuring system is configured to allow the markers to emit light, and to calculate, based on images of the markers, which are captured by the first to third imaging devices, a position and a posture of the probe. In the three-dimensional shape measuring system, a first camera unit holding the first imaging device and the second imaging device and a second camera unit holding the third imaging device are disposed to be substantially orthogonal to each other to reduce measurement errors in a depth direction (y direction).

As a technique of reducing effects of hand shake through a configuration of a probe, such a three-dimensional shape measuring system has been proposed that uses a probe including a plurality of markers disposed so as to have a certain position relationship, a stylus configured to come into contact with a measurement target, and a sub-imaging part configured to capture an image of a three-dimensional measurement region of the measurement target to measure a three-dimensional shape of the measurement target (see JP 2015-190927 A, for example). Here, a position relationship between the markers in the probe and a contact part of the stylus being in contact with the measurement target is known, and a position relationship between the contact part of the stylus and the sub-imaging part is known as well. By allowing a main-imaging part to capture an image of the plurality of markers being emitting light, and by allowing a processing part to measure a three-dimensional position and a three-dimensional posture of the probe, a three-dimensional position of the contact part of the stylus and an orientation of the stylus can be identified. In the processing part, an imaging region of the sub-imaging part is calculated, as well as intersections, angles, and areas of geometric shapes formed with three-dimensional measurement points being designated are calculated. Based on three-dimensional position and posture measurement values of the probe, the respective three-dimensional measurement values are then combined to measure a three-dimensional shape.

In the technique described above, however, if a hand of a user holding the probe shakes, for example, position displacement of the probe may occur. This may results in an error in measurement on a position and a posture of the probe, disadvantageously lowers precision in measurement of a three-dimensional shape. Other three-dimensional shape measuring systems are known from document US 2015/0323308 A1, US 2017/0261315 A1, US 2017/0299379 A1 and US 2014/0046589 A1.

### SUMMARY OF THE INVENTION

An object of the present invention is to provide a technique capable of, even when position displacement of a probe likely occurs, measuring at high precision a three-dimensional shape of a measurement target. This object is achieved by the subject-matters of the independent claims. Further advantageous embodiments of the invention are the subject-matter of the dependent claims. The invention is defined by the independent claims, whereas aspects of the invention are set out below.

An aspect of the present invention is defined in independent claim 1.

According to this aspect, a measurement setting part changes one of an exposure time and the number of times of imaging. A position measurement error on the probe is calculated based on a measurement and a result of imaging being held when such a change is made. The position measurement error is calculated for pluralities of kinds of exposure times and numbers of times of imaging. One of the exposure times and one of the numbers of times of imaging, at which one of a plurality of position measurement errors being acquired is reduced, are set. A position measurement error on a probe includes an error due to position displacement of the probe (hand shake error) and an error that occurs regardless of position displacement of the probe (positioning error). However, by setting an exposure time and the number of times of imaging for the imaging part to an exposure time and the number of times of imaging at which a position measurement error on the probe is reduced, even when position displacement of the probe likely occurs, a three-dimensional shape of a measurement target can be measured at high precision. Examples of a case when a position measurement error on a probe is reduced includes, but not limited to, a case when a position measurement error reaches the minimum, and a case when a position measurement error reaches a predetermined value or below. Values of a plurality of position measurement errors calculated and acquired with respect to pluralities of kinds of exposure times and numbers of times of imaging may be interpolated or extrapolated to set an exposure time and the number of times of imaging to allow a position measurement error to reach the minimum or the predetermined value or below.

Here, examples of errors due to position displacement of a probe being held include, in addition to an error when a hand of a user actually gripping the probe shakes, an error due to position displacement of a holding device holding the probe. On the other hand, an error that likely occurs regardless of position displacement of the probe denotes an error that likely occurs even when effects of position displacement can be ignored, such as a state where the probe is fixed to disallow such position displacement that likely occurs when a hand holding the probe shakes, for example. Examples of aspects of holding the probe is not limited to the aspect where a user grips the probe, as described above, but include an aspect where a holding device such as a robot arm or a holder holds the probe. An exposure time denotes a time during which imaging elements configuring the imaging part receive light from an imaging target. An exposure time can be adjusted by a mechanical or electronic shutter. However, a method for adjusting an exposure time is not limited to this example.

The aspect of the present invention is the above described three-dimensional shape measuring system, wherein, when the exposure time is to be set, the exposure time is set based on a pixel value of an image including the plurality of markers, the image being captured by the imaging part.

According to this configuration, by setting an exposure time beforehand based on a pixel value of an image of the markers, only the number of times of imaging used for averaging may be set, reducing a time required for setting. By allowing a user to perform settings beforehand in a site where the system is to be used, an optimum exposure time can be set in a usage environment for the system under illumination conditions, for example, allowing measurements to be carried out at high precision.

The aspect of the present invention is the above described three-dimensional shape measuring system,
wherein, in a case where the exposure time is to be set, an exposure time is set so as not to saturate a pixel value of an image including the plurality of markers, and after the imaging part captures an image including the plurality of markers with the set exposure time, the exposure time is set so that a maximum value of a pixel value of the image being captured to include the plurality of markers falls within a range from 80% to 100% inclusive of a tone indicated by the pixel value.

The aspect of the present invention is the above described three-dimensional shape measuring system, wherein
the imaging part assumes, based on a past position of the probe in an image being captured, a region allowing the markers to exist when an image is captured, and outputs the region to the processing part, and
the processing part measures from data on an image of the region, a position and a posture of the probe.

The processing part instead of the imaging part can assume, based on a past position of the probe in an image being captured, a region allowing the markers to exist when an image is captured, and obtain an image of the region.

The aspect of the present invention is the above described three-dimentional shape measuring system, wherein
the imaging part reduces an amount of data on an image being captured, and outputs the data to the processing part, and
the processing part measures, from the data on the image, the data being reduced in amount, a position and a posture of the probe.

The processing part instead of the imaging part can reduce an amount of data on an image being captured.

The aspect of the present invention is the above described three-dimensional shape measuring system, wherein the plurality of markers are disposed at positions allowing a posture of the probe to be determined uniquely, and disallowing the markers to lie on a single plain surface.

With the configuration described above, when the imaging part captures an image of the plurality of markers, a measurement error on positions of the markers can be reduced, improving in precision a position measurement of the probe, and thus a measurement of a three-dimensional shape of a measurement target.

In an aspect of the present invention the above described three-dimensional shape measuring system comprises a probe, the probe comprising the plurality of markers disposed so as to allow a posture of the probe to be determined uniquely, and to disallow the markers to lie on a single plain surface.

With the probe described above, when the imaging part captures an image of the markers, a measurement error on positions of the marker can be reduced, improving in precision a measurement of a position and a posture of the probe, and thus a measurement of a three-dimensional shape of a measurement target.

In an aspect of the present invention , the above described three-dimensional shape measuring system comprises an imaging device , the imaging device comprising:
the imaging part;
the processing part; and
the measurement setting part.

With the imaging device described above, even when position displacement of the probe likely occurs, a three-dimensional shape of a measurement target can be measured at high precision.

In an aspect of the present invention the above described three-dimensional shape measuring system comprises a computer device, the computer device comprising:
the processing part;
the three-dimensional shape conversion processing part; and
the timing controller.

With the computer device described above, even when position displacement of the probe likely occurs, a three-dimensional shape of a measurement target can be measured at high precision.

Here, the computer device is a device at least including a central processing unit (CPU) and storage devices such as a read only memory (RAM), a random access memory (ROM), and a hard disc (HD). The CPU is configured to execute a program read from the ROM, for example. However, the computer device is not limited to a single computer device, but may include a plurality of computer devices respectively configured to perform assigned functions to work together.

Another aspect of the present invention is defined in independent claim 8.

By setting an exposure time and the number of times of imaging at which a position measurement error on the probe is reduced, such a measuring time setting method can be provided that is capable of measuring at high precision, even when position displacement of the probe likely occurs, a three-dimensional shape of a measurement target. Examples of a case when a position measurement error on a probe is reduced includes, but not limited to, a case when a position measurement error reaches the minimum, and a case when a position measurement error reaches a predetermined value or below. Values of a plurality of position measurement errors calculated and acquired with respect to pluralities of kinds of exposure times and numbers of times of imaging may be interpolated or extrapolated to set an exposure time and the number of times of imaging to allow a position measurement error to reach the minimum or the predetermined value or below.

The aspect of the present invention is the above described measuring time setting method, wherein, in the second step, a position and a posture of the probe are measured while the probe is fixed to a fixture.

With the configuration described above, when a three-dimensional shape system is factory-produced, such an exposure time and the number of times of imaging can be set that a three-dimensional shape of a measurement target can be measured at high precision while the probe is fixed to a fixture.

The fixture may be a fixture configured to fix a probe to disallow the probe to move in a state where position displacement on the probe being held can be ignored.

The aspect of the present invention is the above described measuring time setting method, wherein, in the second step, a position and a posture of the probe are measured while a user is holding the probe.

With the configuration described above, when a user uses the three-dimensional shape measuring system, such an exposure time and the number of times of imaging can be set that allow a three-dimensional shape of a measurement target to be measured at high precision while the user is actually holding the probe.

Here, examples of a case when a user holds a probe include a case when a user directly grips a probe and a case when a user holds a holding device holding a probe.

When an optimum exposure time is known beforehand, the exposure time can be used as a predetermined exposure time. _Therefore, only the number of times of imaging used for averaging can be set, reducing a time required for setting. By allowing a user to perform settings beforehand in a site where the system is to be used, an optimum exposure time can be set in a usage environment for the system under illumination conditions, for example, allowing measurements to be carried out at high precision. Examples of a case when a position measurement error on a probe is reduced includes, but not limited to, a case when a position measurement error reaches the minimum, and a case when a position measurement error reaches a predetermined value or below. Values of a plurality of position measurement errors calculated and acquired with respect to pluralities of kinds of exposure times and numbers of times of imaging may be interpolated or extrapolated to set an exposure time and the number of times of imaging to allow a position measurement error to reach the minimum or the predetermined value or below.

The aspect of the present invention is the above described measuring time setting method, wherein the exposure time being predetermined is to be set in accordance with a pixel value of the plurality of markers in an image captured by the imaging part.

According to the aspect of the present invention, an exposure time can be set beforehand based on a pixel value of an image of the markers.

In a case where the exposure time is to be set, an exposure time is set so as not to saturate a pixel value of an image of the markers, and after the imaging device captures an image including the markers with the set exposure time, the exposure time is set so that a maximum value of a pixel value of the image being captured to include the markers falls within a range from 80% to 100% inclusive of a tone indicated by the pixel value.

According to the present invention, such a technique can be provided that allows a three-dimensional shape measuring system to measure at high precision, even when position displacement of the probe likely occurs, a three-dimensional shape of a measurement target.

### BRIEF DESCRIPTION OF THE DRAWINGS

Fig. 1 is an overall configuration view showing an outline of a three-dimensional shape measuring system common to embodiments of the present invention;
Fig. 2 is a functional block diagram of the three-dimensional shape measuring system common to the embodiments of the present invention;
Fig. 3 is a flowchart of a three-dimensional shape measurement procedure common to the embodiments of the present invention;
Fig. 4 is a flowchart of a measuring time setting method in a first embodiment of the present invention;
Figs. 5A to 5C are correspondence tables in the first embodiment of the present invention;
Figs. 6A and 6B are graphs each showing a correspondence relationship between a measuring time and a position measurement error on a probe;
Fig. 7 is a flowchart of a measuring time setting method in a second embodiment of the present invention;
Fig. 8 is a flowchart of a measuring time setting method in a third embodiment of the present invention;
Fig. 9 is a flowchart of an exposure time setting method in a fourth embodiment of the present invention;
Fig. 10 is a flowchart of a measuring time setting method in the fourth embodiment of the present invention;
Fig. 11 is a flowchart of the measuring time setting method in the fourth embodiment of the present invention;
Figs. 12A and 12B are views each showing an arrangement of marker parts in a fifth embodiment of the present invention;
Fig. 13 is a schematic view showing transfer image data in a sixth embodiment of the present invention; and
Fig. 14 is a view showing a configuration of transfer image data in a seventh embodiment of the present invention.

### DETAILED DESCRIPTION OF PREFERRED EMBODIMENTS

### [Application example]

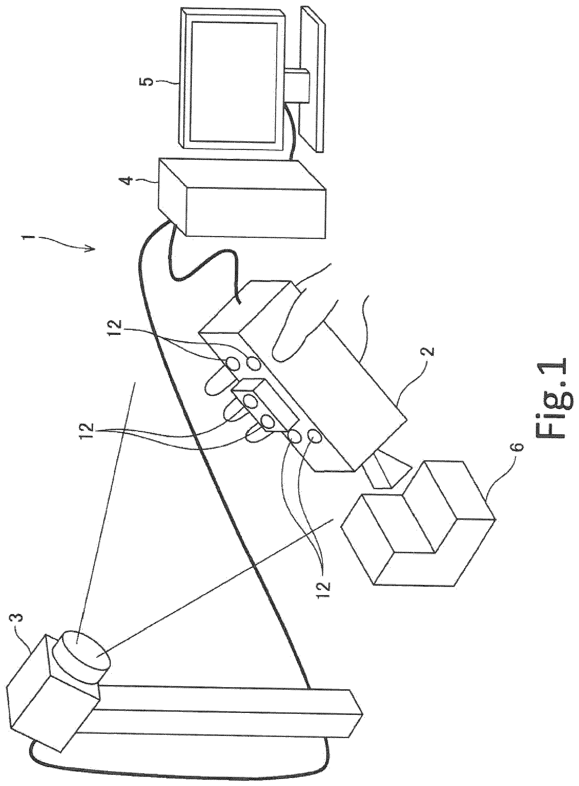

Hereinafter, an application example of the present invention will be described with reference to the drawings. The present invention is applied to a three-dimensional shape measuring system 1 as illustrated in Fig. 1, for example.

In the three-dimensional shape measuring system 1 described above, a user grips and directs a probe 2 toward a measurement target 6 to measure a three-dimensional shape of the measurement target 6. A flying time of light from a time when light is emitted from a non-contact three-dimensional shape measuring sensor 7 provided to the probe 2 to a time when the light reflected by a surface of the measurement target 6 is received is used and a distance to the measurement target 6 is measured to measure a three-dimensional shape of the measurement target 6. In synchronization with the measurement of the three-dimensional shape of the measurement target 6, an imaging device 3 (specifically, an imaging part 13 included in the imaging device 3) captures an image including a plurality of markers 12, ...12 disposed to the probe 2. How the plurality of markers 12, ...12 are disposed to the probe 2 is known beforehand. Therefore, by processing the image including the plurality of markers 12, ...12, extracting positions of the markers 12, and calculating a position relationship, a position and a posture of the probe 2 with respect to the imaging device 3 can be measured. The three-dimensional shape of the measurement target 6 measured by the non-contact three-dimensional shape measuring sensor 7 of the probe 2 is served in a probe coordinate system defined for the probe 2. The position and the posture of the probe 2 with respect to the imaging device 3 is served in a world coordinate system. A measurement of a three-dimensional shape of the measurement target 6 by the non-contact three-dimensional shape measuring sensor 7 and a measurement of a position and a posture of the probe 2 by the imaging device 3 are synchronized with each other. Therefore, a conversion from the probe coordinate system to the world coordinate system is possible, allowing a calculation of a three-dimensional shape of the measurement target 6 in the world coordinate system. By combining in the world coordinate system three-dimensional shapes of different regions of the measurement target 6 measured by directing the probe 2 toward the different regions of the measurement target 6, a three-dimensional shape of the measurement target 6 with respect to a region combined with the regions can be measured. To measure a three-dimensional shape of the measurement target 6 with the probe 2, as described above, the user grips and directs the probe 2 to allow the non-contact three-dimensional shape measuring sensor 7 to face a region to be measured on the measurement target 6. At this time, if position displacement occurs, such as a hand of the user shakes, an error (hand shake error) also occurs on a measurement of a position and a posture of the probe 2 based on an image including the plurality of markers 12, ...12 to be captured by the imaging device 3, lowering precision in measurement of a three-dimensional shape. When a position and a posture of the probe 2 are to be measured, another error (positioning error) due to some reasons including noise in the imaging device 3 and variations among imaging elements, which do not relate to the position displacement described above, may also occur.

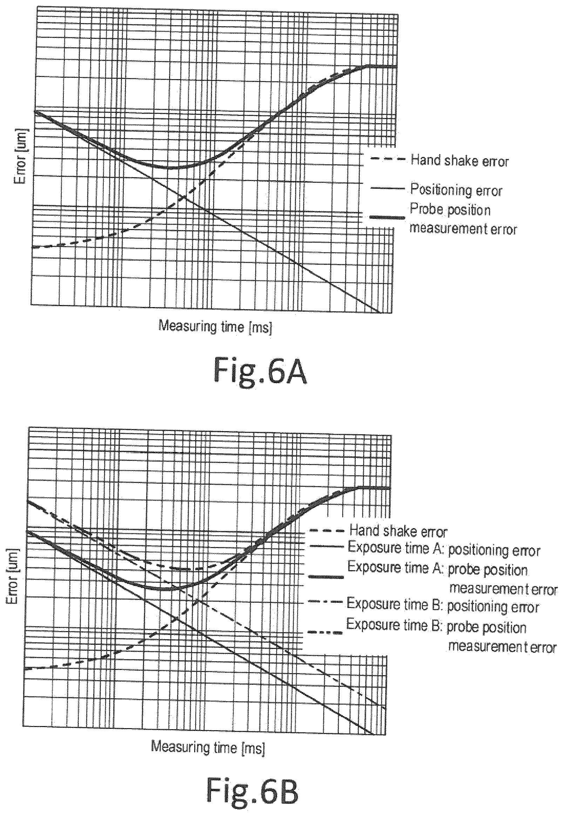

In the three-dimensional shape measuring system 1, a measuring time including an exposure time when the imaging device 3 captures images as well as the number of times (average number of times) images are to be captured for averaging information on positions of the plurality of markers 12, ...12 to be extracted from data of images being captured is set. Here, an exposure time denotes a time during which imaging elements configuring the imaging device 3 receive light from an imaging target. A method for limiting an exposure time is not particularly limited. Here assumes a case when a user performs an actual measurement. As illustrated in Fig. 6A, when an average number of times is increased for a certain exposure time, positioning errors will be averaged. On the other hand, a time the user is gripping the probe 2 extends longer. As a result, hand shake errors tend to increase. Therefore, such a measuring time exists that a position measurement error including both a hand shake error and a positioning error on the probe reaches the minimum. As illustrated in Fig. 6B, in accordance with an exposure time, a relationship between a position measurement error and a measuring time shifts. The present invention focuses on the relationship described above, and, by sweeping an exposure time and an average number of times, and setting an exposure time and an average number of times, at which a position measurement error reaches the minimum, improves precision in measurement of a three-dimensional shape. In each of Figs. 6A and 6B, a measuring time indicated by a horizontal axis is actually calculated based on the number of times that takes a discrete value. Therefore, the measuring time is represented by a discrete value. Curves illustrated in Figs. 6A and 6B are curves rendered based on the discrete values, described above, joined with each other.

In a case where the three-dimensional shape measuring system 1 is factory-produced, even when the probe 2 is fixed and a position measurement error on the probe does not include a hand shake error, but includes a positioning error only, a correspondence relationship between a measuring time and a hand shake error is acquired beforehand. The correspondence relationship is then used to set an exposure time and an average number of times, at which a position measurement error reaches the minimum. To allow a user to use the three-dimensional shape measuring system to perform a measurement, such a special mode as a measuring time setting mode is provided beforehand. At this time, similarly to when the user performs a measurement, the user holds the probe and sets an exposure time and an average number of times, at which a position measurement error reaches the minimum. When a three-dimensional shape of the measurement target 6 is to be measured, the probe 2 is caused to stand still or is caused to move at a constant speed. In either case, an exposure time and an average number of times, at which a position measurement error reaches the minimum, can be set. When an optimum exposure time is known beforehand, first an exposure time can be set to the optimum time, and then a position measurement error can be calculated a plurality of average numbers of times to set an average number of times at which a position measurement error reaches the minimum.

### [First Embodiment]

The three-dimensional shape measuring system 1 according to an embodiment of the present invention will be described herein in further detail with reference to the drawing.

### <System configuration>

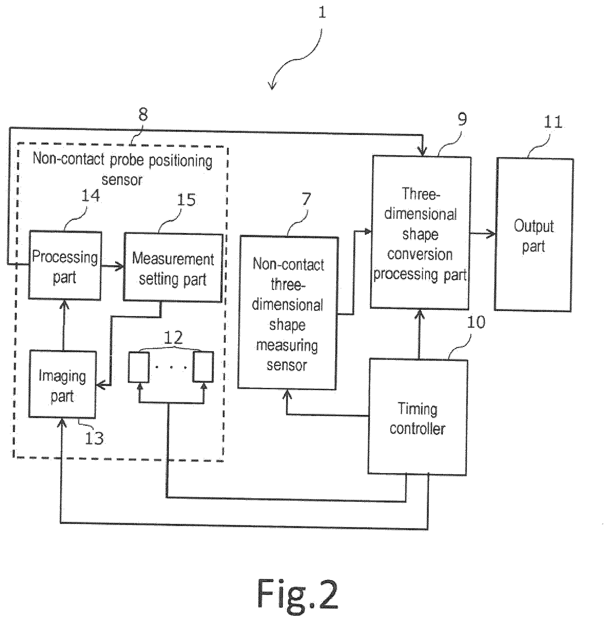

Fig. 1 is a view showing an outline of an overall configuration of the three-dimensional shape measuring system 1 according to the embodiment. Fig. 2 is a functional block diagram of the three-dimensional shape measuring system.

As illustrated in Fig. 1, the three-dimensional shape measuring system 1 according to the embodiment includes the probe 2, the imaging device 3, a personal computer (PC) 4 coupled to the probe 2 and the imaging device 3, and a display 5 coupled to the PC 4.

Next, functional blocks illustrated in Fig. 2 will be described.

The three-dimensional shape measuring system 1 mainly includes the non-contact three-dimensional shape measuring sensor 7, a non-contact probe positioning sensor 8, a three-dimensional shape conversion processing part 9, a timing controller 10, and an output part 11. The non-contact probe positioning sensor 8 includes the plurality of markers 12, ...12 each configured to emit light, the imaging part 13, a processing part 14, and a measurement setting part 15. The non-contact three-dimensional shape measuring sensor 7 is configured to measure a three-dimensional shape of a measurement target 6 in a non-contact manner. For example, the non-contact three-dimensional shape measuring sensor 7 uses a flying time of light from a time when light is emitted toward the measurement target 6 and to a time when the light reflected by the surface of the measurement target 6 is received, and measures a distance to the measurement target 6 to measure the three-dimensional shape of the measurement target 6. Specifically, the non-contact three-dimensional shape measuring sensor 7 is included, together with the markers 12, ...12, in the probe 2. The imaging part 13 is configured to capture an image including the plurality of markers 12, ...12, and, specifically, is included in the imaging device 3. The timing controller 10 is configured to output timing control signals respectively to the non-contact three-dimensional shape measuring sensor 7, the markers 12, ...12, the imaging part 13, and the three-dimensional shape conversion processing part 9. The non-contact three-dimensional shape measuring sensor 7 measures, in accordance with the timing control signal, the three-dimensional shape of the measurement target 6. The plurality of markers 12, ...12 emit light in accordance with the timing control signal. The imaging part 13 captures an image including the plurality of markers 12, ...12 emitting light in accordance with the timing control signal. The three-dimensional shape conversion processing part 9 is configured to convert and combine data received from the non-contact probe positioning sensor 8 and the non-contact three-dimensional shape measuring sensor 7 in accordance with the signal sent from the timing controller 10 to calculate data of the three-dimensional shape. The processing part 14 is configured to process the image including the plurality of markers 12, ...12 captured by the imaging part 13, to extract positions of the markers 12, ...12, and to calculate information on a position relationship among the markers 12, ...12. The plurality of markers 12, ...12 are disposed at the predetermined positions on the probe 2. Therefore, based on the position relationship among the plurality of markers 12, ...12, which is known beforehand, and a position relationship among the plurality of markers 12, ...12, which is extracted from the image captured by the imaging part 13, a position and a posture of the probe 2 in the world coordinate system defined for the imaging part 13 is calculated. A three-dimensional shape of the measurement target 6, which is to be measured by the non-contact three-dimensional shape measuring sensor 7, is served in the probe coordinate system defined for the probe 2 including the non-contact three-dimensional shape measuring sensor 7. As described above, the non-contact three-dimensional shape measuring sensor measures a three-dimensional shape of the measurement target 6, and the imaging part 13 captures an image including the plurality of markers 12, ...12, each in synchronization with timing control signals. Therefore, a position and a posture of the probe when the three-dimensional shape of the measurement target 6 is measured is known. In other words, the three-dimensional shape of the measurement target 6 in the probe coordinate system and the position and the posture of the probe 2 in the world coordinate system at this time are associated with each other via the timing control signals. Therefore, the three-dimensional shape conversion processing part 9 can convert the three-dimensional shape of the measurement target 6 in the probe coordinate system, which is measured by the non-contact three-dimensional shape measuring sensor 7, into a three-dimensional shape in the world coordinate system. In the world coordinate system, pieces of information respectively indicative of three-dimensional shapes of regions adjacent to or overlap with each other, which are acquired in measurements performed immediately before, are combined. Information indicative of the three-dimensional shape of the measurement target 6 is thus generated. Specifically, the PC 4 including a CPU and storage devices such as a RAM, a ROM, and a HD further includes the processing part 14, the three-dimensional shape conversion processing part 9, and the timing controller 10. Specifically, the output part 11 is included in the display 5. The imaging device 3 may include the imaging part 13 and the processing part 14.

As will be described later, the measurement setting part 15 is configured to sweep an exposure time and an average number of times for the imaging part, to measure a position and a posture of the probe 2, and to set a measuring time to reduce a position measurement error to the minimum. In Fig. 2, the measurement setting part 15 is provided separately from the processing part 14. However, the measurement setting part 15 may be included in the processing part 14.

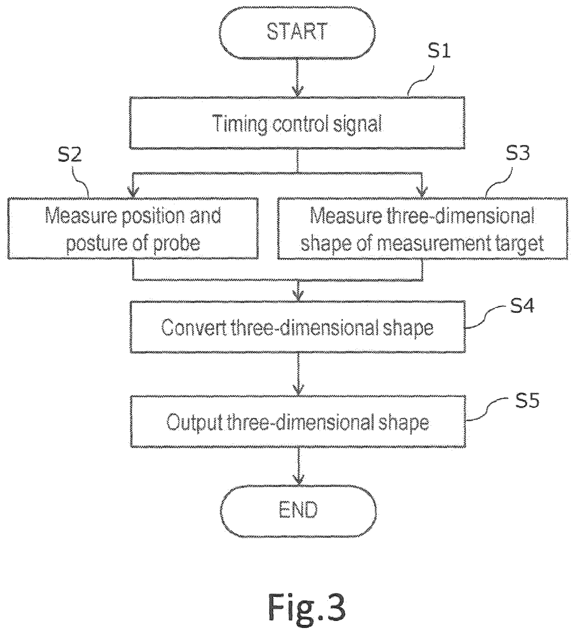

An outline of a procedure of how the three-dimensional shape measuring system according to the embodiment measures a three-dimensional shape will be described based on the flowchart in Fig. 3.

First, the timing controller 10 outputs a timing control signal controlling a timing when a measurement is to be performed (step 1). In accordance with the timing control signal, a position and a posture of the probe 2 are measured (step 2), as well as a three-dimensional shape of the measurement target 6 is measured (step 3). At this time, as step 3, the three-dimensional shape of the measurement target 6, which falls within a range of a visual field of the non-contact three-dimensional shape measuring sensor 7, is measured. In step 2, in synchronization with the measurement of the three-dimensional shape, the plurality of markers 12, ...12 emit light. Based on an image including the markers 12, ...12, the position and the posture of the probe 2 are measured. Based on the information, a three-dimensional shape conversion process takes place (step 4). At this time, as the position of the probe 2 has been measured, the three-dimensional shape of the measurement target 6, which represents the three-dimensional shape of the measurement target 6 in the probe coordinate system defined for the probe 2 and is measured by the non-contact three-dimensional shape measuring sensor 7, can be converted into a three-dimensional shape in the world coordinate system. As described above, by combining the three-dimensional shapes of the measurement target 6, which are converted into the three-dimensional shapes in the world coordinate system, information indicative of the three-dimensional shape of the measurement target 6 in the world coordinate system can be acquired. The information indicative of the three-dimensional shape, which is calculated through the three-dimensional shape conversion process, is then output, as an image, to the display 5, for example (step 5).

The process of measuring a position and a posture of the probe 2 in step 2 will be specifically described. In accordance with the timing control signal in step 1, the plurality of markers 12, ...12 disposed in the probe 2 emit light. In accordance with the timing control signal, the imaging part 13 captures an image including the plurality of markers 12, ...12 of the probe 2 while the plurality of markers 12, ...12 are emitting light. By processing the image including the plurality of markers 12, ...12, contours of the markers 12 are extracted, centers are determined, and position relationships such as distances of the centers each other, and a shape rendered by lines joining the centers, are calculated. The arrangement of the plurality of markers 12, ...12 on the probe 2, as well as the position relationship among the plurality of markers 12, ...12 each other are known beforehand. Therefore, the information and information calculated from the image described above can be used to measure a position and a posture of the probe 2 in the world coordinate system defined for the imaging part 13 being fixed. The method described above does not limit a method for extracting positions of the plurality of markers 12, ...12 from a result of capturing an image including the plurality of markers 12, ...12, and for measuring a position and a posture of the probe 2 in the world coordinate system based on the information on the position relationship among the plurality of markers 12, ...12. At this time, the imaging part 13 repeats, the number of times set by the measurement setting part 15, capturing an image including the plurality of markers 12, ...12 with an exposure time set by the measurement setting part 15. As described above, by repeating, for averaging, the measurement process described above on a plurality of images acquired through imaging repeated a plurality of times, errors can be averaged, reducing effects of the errors. Examples of errors include an error due to position displacement of the probe 2 when a hand of a user shakes, for example, and an error that occurs, due to noise and variation in characteristic of the imaging elements, for example, regardless of position displacement of the probe 2. The information on the position and the posture of the probe 2, which are measured in the processing part 14, is sent to the three-dimensional shape conversion processing part 9.

The three-dimensional shape measurement process for the measurement target 6 in step 3 will be specifically described. The non-contact three-dimensional shape measuring sensor 7 performs, in accordance with a timing control signal, a measurement on the measurement target 6 while the probe 2 is held at a position allowing the non-contact three-dimensional shape measuring sensor 7 to measure a three-dimensional shape of the measurement target 6. A three-dimensional shape of the measurement target 6 can be measured by, for example, measuring a distance from the non-contact three-dimensional shape measuring sensor to the surface of the measurement target 6 based on a flying time from a time when a signal such as laser light is emitted toward the measurement target 6 to a time when the signal reflected by the surface of the measurement target 6 is received. However, a method for measuring a three-dimensional shape is not limited to this method. By measuring a three-dimensional shape of the measurement target 6 while the probe 2 is held at a certain position with respect to the measurement target 6, changing the position of the probe 2 with respect to the measurement target 6, and repeating a measurement of a three-dimensional shape of the measurement target 6, the three-dimensional shapes on wider ranges of the measurement target 6 can be measured. The non-contact three-dimensional shape measuring sensor 7 sends to the three-dimensional shape conversion processing part 9 data on the measured three-dimensional shapes of measurement target 6.

The three-dimensional shape conversion process in step 4 will be specifically described. The non-contact three-dimensional shape measuring sensor 7 outputs, to the three-dimensional shape conversion processing part 9, data on three-dimensional shapes of the measurement target 6 in the probe coordinate system defined for the probe 2. The processing part 14 outputs, to the three-dimensional shape conversion processing part 9, data on a position and a posture of the probe 2 in the world coordinate system. A three-dimensional shape of the measurement target 6 in the probe coordinate system and a position and a posture of the probe 2 in the world coordinate system are respectively measured in synchronization with timing control signals, and are thus associated with each other via information on a measurement timing sent from the timing controller 10. Therefore, data on a three-dimensional shape in the probe coordinate system can be converted into data on a three-dimensional shape in the world coordinate system. The data on the three-dimensional shape converted as described above is identified with a relationship among positions each other in the world coordinate system. Therefore, the three-dimensional shape conversion processing part 9 can combine data acquired through measurements performed immediately before on three-dimensional shapes on regions adjacent to or overlapping with each other to generate data on a three-dimensional shape of the measurement target 6 in the world coordinate system.

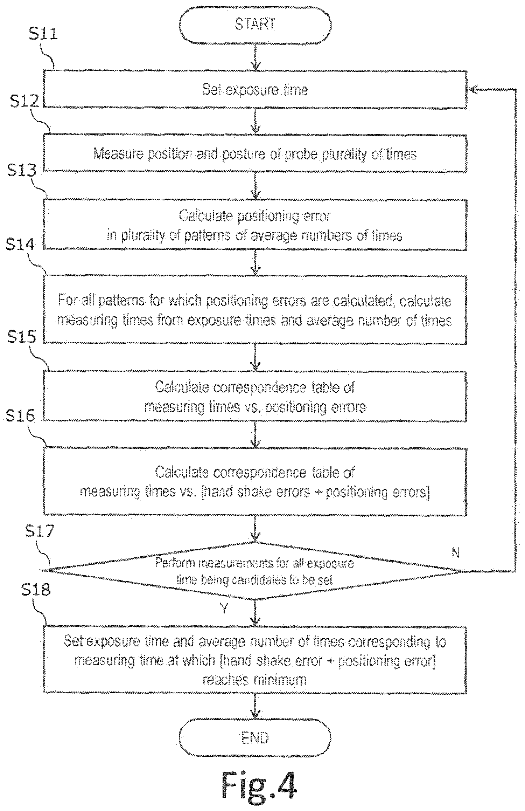

How to perform the measuring time setting method described above at a time of factory-production will be described based on the flowchart illustrated in Fig. 4. In this case, steps described below take place while the probe 2 is fixed and held at a predetermined position. By fixing and holding the probe 2 at the predetermined position, as described above, effects of position displacement of the probe 2, which occurs when a hand shakes, for example, can be avoided. By factory-setting a measuring time, default values of an exposure time and an average number of times can be acquired. Therefore, even when no measuring time is set at a time of a measurement in a site, the default values can be used to the perform measurement.

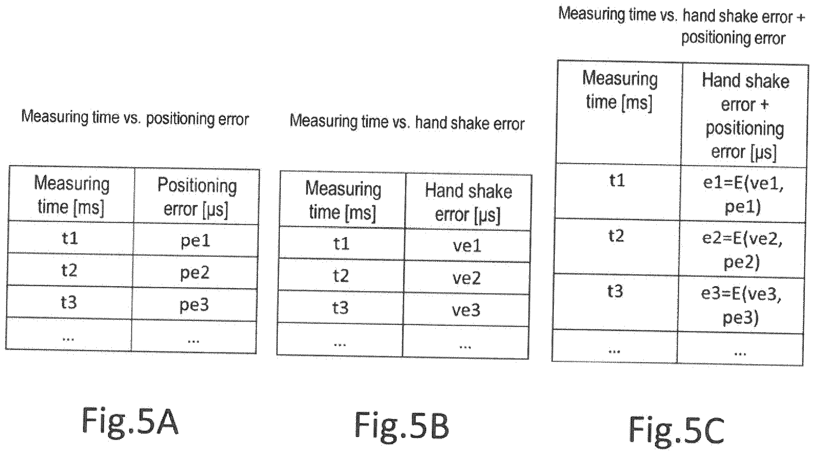

First, one exposure time among exposure times being candidates to be set is set (step 11), and a position and a posture of the probe are measured a plurality of times (step 12). For the positions measured on the probe, a positioning error is calculated in a plurality of patterns of average numbers of times (step 13). At this time, since the probe 2 is fixed, only a positioning error is calculated as a position measurement error. Here, for example, a measuring time can be represented as: measuring time = (exposure time + transfer time (for pixel data from the imaging part (camera) 13)) × average number of times. For all the patterns for which the positioning errors are calculated, measuring times are calculated from the exposure times and the average numbers of times (step 14). Next, a correspondence table of the measuring times and the positioning errors being calculated is calculated (step 15). Fig. 5A shows an example of a correspondence table representing a correspondence relationship between a measuring time and a positioning error. To perform the calculation at a time of factory-production, since the position of the probe 2 being fixed and held, as described above, is known beforehand, positioning errors can be calculated as errors from the positions known beforehand. As illustrated in Fig. 5B, a correspondence table representing a correspondence relationship between a measuring time and a hand shake error is acquired beforehand. The correspondence table of measuring times and hand shake errors may be created based on data of experiments actually performed or based on simulations. The correspondence table of measuring times and positioning errors and the correspondence table of measuring times and hand shake errors are used to calculate a correspondence table of measuring times and position measurement errors respectively including hand shake errors and positioning errors for the exposure time being set, as illustrated in Fig. 5C (step 16). Here, a position measurement error representing an error including a hand shake error and a positioning error is determined based on a hand shake error and a positioning error. However, a determination of a position measurement error is not limited to this simple addition. As illustrated in Fig. 5C, a position measurement error e1 is calculated as E(ve1, pe1) through a calculating Formula E with a hand shake error ve1 and a positioning error pe1. Instead of the simple addition, square-root of sum of squares (SRSS) or root-mean-square (RMS) can be used as calculating formulae. Steps 11 to 16 are repeated for all the exposure times being candidates to be set to calculate a correspondence table of measuring times and position measurement errors respectively including hand shake errors and positioning errors (step 17). From the correspondence table, an exposure time and an average number of times, at which a position measurement error including a hand shake error and a positioning error reaches the minimum, are set (step 18).

Fig. 6A shows a correspondence relationship between a measuring time and a position measurement error including a hand shake error and a positioning error on the probe 2. Fig. 6B illustrates a correspondence relationship between a measuring time and a position measurement error including a hand shake error and a positioning error on the probe 2 when an exposure time being set is changed. Here, a graph showing a correspondence relationship between a measuring time and a hand shake error is represented by a broken line. A graph showing a correspondence relationship between a measuring time and a positioning error when an exposure time A is selected is represented by a thin solid line. A graph showing a correspondence relationship between a measuring time and a position measurement error (hand shake error + positioning error) on the probe 2 in this case is represented by a thick solid line. A graph showing a correspondence relationship between a measuring time and a positioning error when an exposure time B is selected is represented by a one-dot chain line. A graph showing a correspondence relationship between a measuring time and a position measurement error (hand shake error + positioning error) on the probe 2 in this case is represented by a two-dot chain line. Here describes, as an example, a case when a hand shake error and a positioning error are simply added as a position measurement error. However, as described above, a calculation of a position measurement error is not limited to the simple addition. As illustrated in Fig. 6A, when an average number of times increases, positioning errors are often averaged. On the other hand, when a measuring time extends longer, a time a user grips a probe on his or her hand often extends longer. As a result, hand shake errors tend to increase. Therefore, such a measuring time exists that a position measurement error representing a sum of a hand shake error and a positioning error on the probe 2 reaches the minimum. As illustrated in Fig. 6B, the graph showing the relationship between the measuring time and the positioning error shifts in accordance with an exposure time. Therefore, a measuring time at which a position measurement error on the probe 2 reaches the minimum differs. Therefore, by changing an exposure time being set and repeating steps 11 to 16, an exposure time and an average number of times, at which a position measurement error including a hand shake error and a positioning error reaches the minimum, can be set in step 18.

### [Second Embodiment]

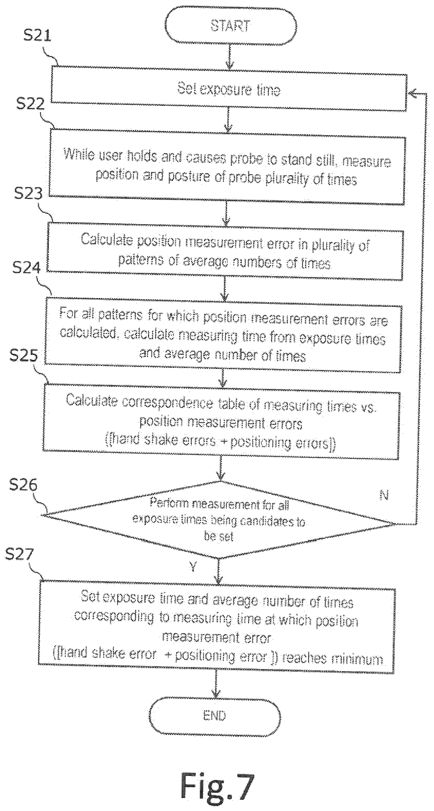

The embodiment will describe, based on the flowchart illustrated in Fig. 7, how to set a measuring time when a user uses the probe, by providing a special mode such as a measuring time setting mode. Here will describe how to combine three-dimensional shapes of the measurement target 6 measured when the user has caused the probe 2 to stand still (stamp style, for example). It is preferable that the factory settings described in the first embodiment be performed as initial settings.

First, the user starts the measuring time setting mode, and holds and causes the probe 2 to stand still, similarly to when an actual measurement is performed. After that, the processing part 14 sets one of exposure times being candidates to be set (step 21). The user then grips and causes the probe 2 to stand still to measure a position and a posture of the probe a plurality of times (step 22). For the positions measured on the probe, a position measurement error is calculated in a plurality of patterns of average numbers of times (step 23). In this case, a position measurement error to be calculated cannot be separated into a hand shake error and a positioning error, unlike with the first embodiment. However, conceptually, the position measurement error includes a hand shake error based on position displacement (shaking of a hand, for example) of the probe 2 being held, and a positioning error that likely occurs even when the probe 2 stands still. Next, for all the patterns for which the position measurement errors are calculated, measuring times are calculated from the exposure times and the average numbers of times (step 24). A correspondence table of the measuring times and the position measurement errors being calculated is then calculated (step 25). Steps 21 to 25 are repeated for all the exposure times being candidates to be set to calculate a correspondence table of measuring times and position measurement errors (step 26). From the correspondence table, an exposure time and an average number of times, at which a position measurement error including a hand shake error and a positioning error reaches the minimum, are set (step 27).

### [Third Embodiment]

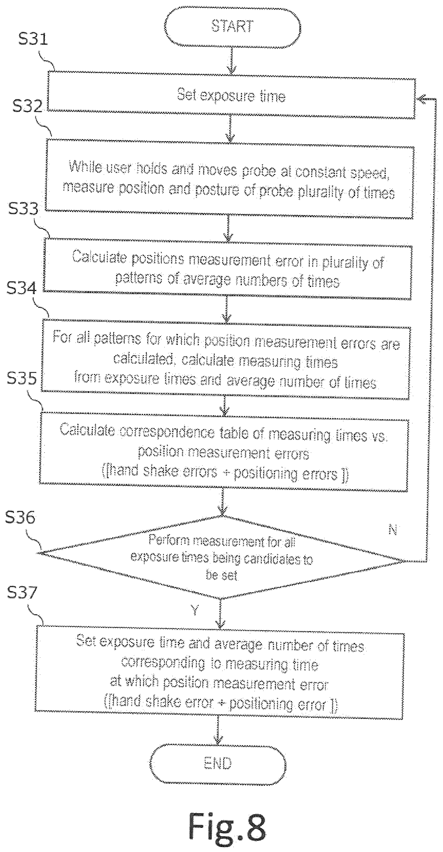

The embodiment will describe, based on the flowchart illustrated in Fig. 8, how to set a measuring time when a user uses the probe, by providing a special mode such as a measuring time setting mode, similar to the second embodiment. However, the embodiment will describe a case when the probe 2 is moved to measure a three-dimensional shape of the measurement target 6. Also here, it is preferable that the factory settings described in the first embodiment be performed as initial settings.

First, the user starts the measuring time setting mode, and holds and moves the probe 2 at a constant speed, similarly to when an actual measurement is performed. After that, the processing part 14 sets one of exposure times being candidates to be set (step 31). The user then grips and moves the probe 2 at the constant speed to measure a position and a posture of the probe a plurality of times (step 32). For the positions measured on the probe, a position measurement error is calculated in a plurality of patterns of average numbers of times (step 33). In this case, a position measurement error to be calculated cannot be separated into a hand shake error and a positioning error, unlike with the first embodiment. However, conceptually, the position measurement error includes a hand shake error based on position displacement (shaking of a hand, for example) of the probe 2 being held, and a positioning error that likely occurs even when no position displacement occurs on the probe 2. Next, for all the patterns for which the position measurement errors are calculated, measuring times are calculated from the exposure times and the average numbers of times (step 34). A correspondence table of the measuring times and the position measurement errors being calculated is then calculated (step 35). Steps 31 to 35 are repeated for all the exposure times being candidates to be set to calculate a correspondence table of measuring times and position measurement errors (step 36). From the correspondence table, an exposure time and an average number of times, at which a position measurement error reaches the minimum, are set (step 37).

### [Fourth Embodiment]

The embodiment will describe a method for setting, when an optimum exposing condition under which best positioning precision, i.e., best precision in position measurement, can be achieved, is known, the optimum exposing condition by using an image at an initial stage of setting a measuring time for the non-contact probe positioning sensor 8, instead of sweeping, as described in the first to third embodiments, an exposure time in setting a measuring time.

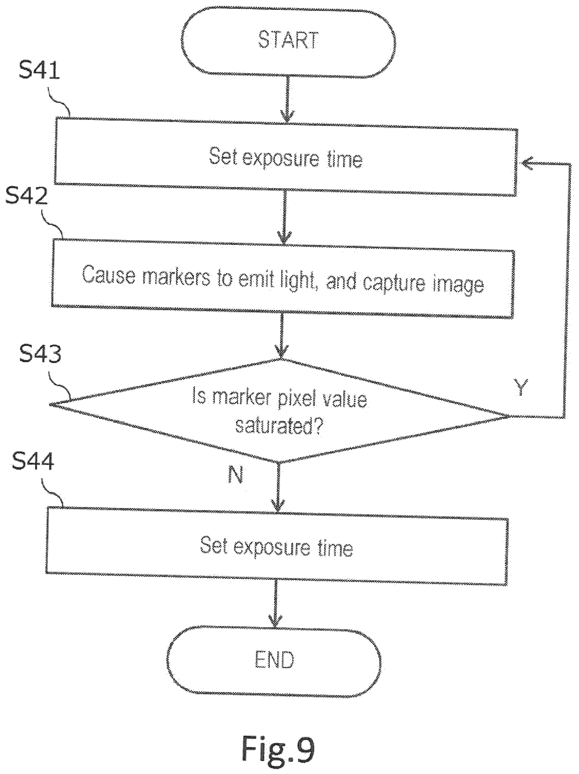

An exposure time setting method according to the embodiment will be described based on the flowchart illustrated in Fig. 9.

First, immediately after commencement of setting of a measuring time for the non-contact probe positioning sensor 8, an exposure time for the imaging part is set to an initial exposure time (step 4]). The markers 12 of the probe 2 are caused to emit light, and an image is captured (step 42). Whether a pixel value of the markers 12 in the image being captured is saturated is then determined (step 43). In step 43, when the pixel value of the markers 12 in the image being captured is saturated, an exposure time is shortened, and steps 41 to 43 are then repeated. In step 43, when a pixel value of the markers 12 in the image being captured is not saturated, an exposure time is set to allow a maximum value of the pixel value of the markers to be an optimum pixel value (step 44). Here, the exposure time is set to allow the pixel value to fall within a range from 80% to 100% inclusive of a tone as the optimum pixel value.

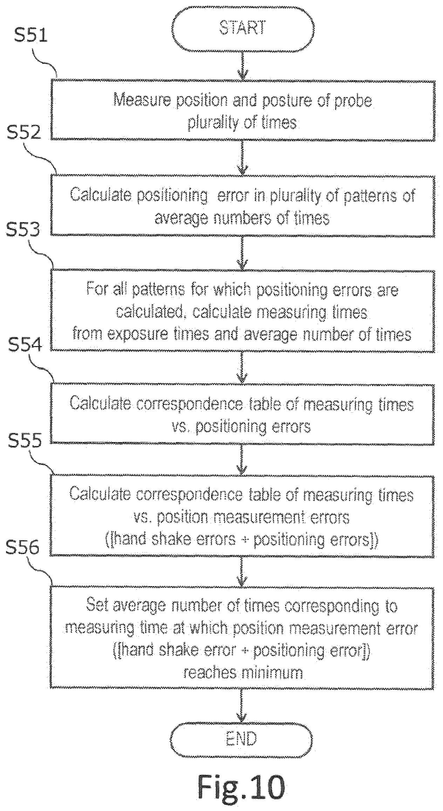

A method for factory-setting a measuring time when an exposure time has been set through the steps described above will be described based on Fig. 10.

First, a position and a posture of the probe 2 are measured a plurality of times (step 51). For the positions measured on the probe, a positioning error is calculated an average number of times (step 52). For all the patterns for which the positioning errors are calculated, measuring times are calculated from the exposure times and the average numbers of times (step 53). Next, a correspondence table of the measuring times and the positioning errors being calculate is calculated (step 54). A correspondence table of measuring times and hand shake errors, which is acquired beforehand, is used to calculate a correspondence table of the measuring times and position measurement errors respectively including hand shake errors and positioning errors for the exposure time being set (step 55). The correspondence table is used to set an average number of times, at which a position measurement error reaches the minimum (step 56).

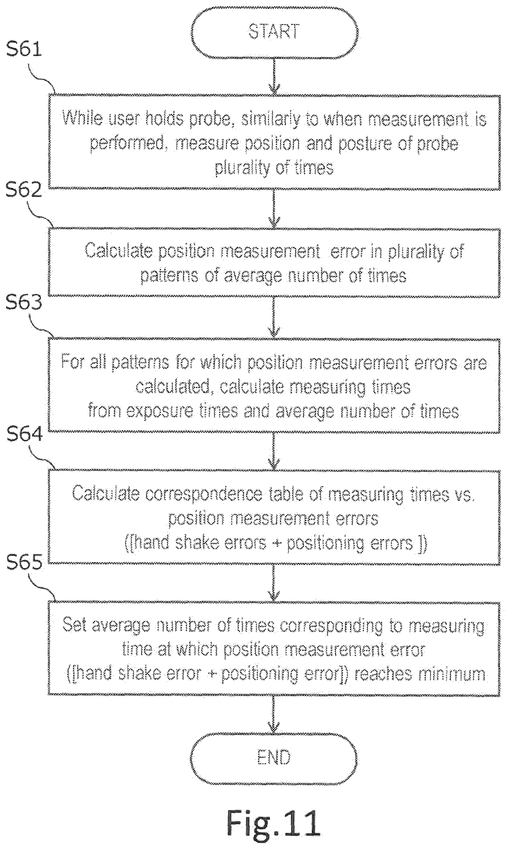

A method for setting a measuring time when an exposure time has been set through the steps described above and a user uses the probe will be described based on Fig. 11.

First, the user starts the measuring time setting mode, and grips and causes the probe 2, similarly to when an actual measurement is performed, i.e., to stand still or to move at a constant speed. After that, the user holds the probe 2 to measure a position and a posture of the probe a plurality of times, similarly to when an actual measurement is performed (step 61). For the positions measured on the probe, a position measurement error is calculated in a plurality of patterns of average numbers of times (step 62). Also here, a position measurement error to be calculated cannot be separated into a hand shake error and a positioning error, unlike with the first embodiment. However, conceptually, a position measurement error includes a hand shake error based on position displacement (shaking of a hand, for example) of the probe being held, and a positioning error that likely occurs even when the probe 2 stands still. Next, for all the patterns for which the position measurement errors are calculated, measuring times are calculated from the exposure times and the average numbers of times (step 63). A correspondence table of the measuring times and the position measurement errors being calculated is then calculated (step 64). From the correspondence table, an average number of times, at which a position measurement error reaches the minimum, is set (step 65).

### [Fifth Embodiment]

The embodiment relates to the markers 12, ...12 of the non-contact probe positioning sensor 8 in the three-dimensional shape measuring system.

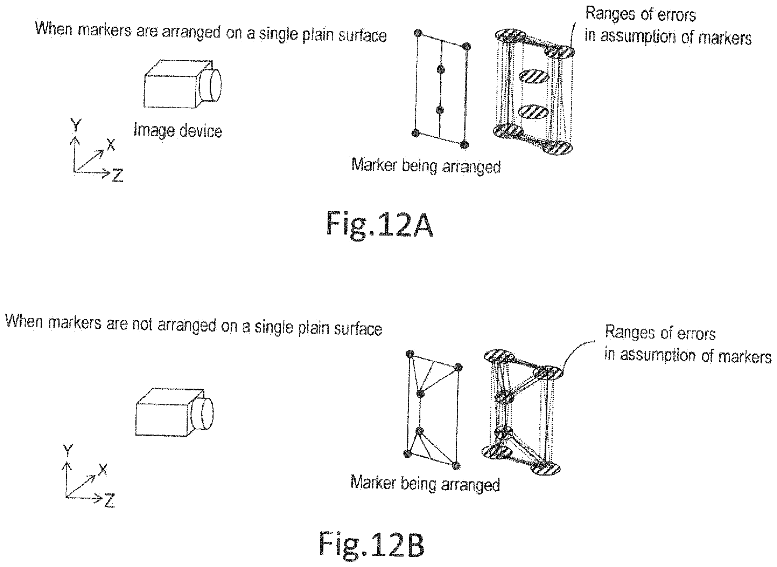

As illustrated in Fig. 12A, in assuming a three-dimensional position and a three-dimensional posture when imaging elements disposed in a z direction capture an image of the plurality of markers 12, ...12, information on positions being lost due to projection in the z direction is assumed from a parallax that occurs in an x direction or a y direction. Therefore, an assumption error in the z direction occurs greater than an assumption error in the x direction or the y direction. Therefore, as illustrated in Fig. 12A, when the plurality of markers 12, ...12 are disposed at positions on a single plain surface passing through four apexes of a rectangular shape and two points on symmetrical axes parallel to long sides of the rectangular shape, ranges of errors in assumption of the positions of the markers 12, ...12 are represented by hatching portions. On the other hand, two of the markers, which lie at a center, are disposed at positions outside the single plain surface disposed with the other of the markers. As described above, when the markers 12, ...12 are three-dimensionally disposed on the probe, a geometrical constraint occurs in the z direction. As a result, as illustrated in the hatching portion in Fig. 12B, errors in assumption of three-dimensional positions and three-dimensional postures of the markers 12, ...12 can be reduced. In other words, errors in assumption of a position and a posture of the probe 2 can be reduced, achieving a highly precise measurement of a three-dimensional shape of a measurement target.

### [Sixth Embodiment]

The embodiment relates to data on an image captured with the markers 12, which is to be transferred from the imaging part 13 to the processing part 14.

The imaging part 13 captures an image of a whole visual field including the markers 12. By transferring to the processing part 14 only data on pixels in a region in which the markers 12 exist based on information on past positions of the markers 12, an amount of data to be transferred can be reduced. As described above, when an amount of data to be transferred can be reduced, a time required to transfer the data and a time required to process the data can also be reduced, achieving high-speed processing and highly precise positioning.

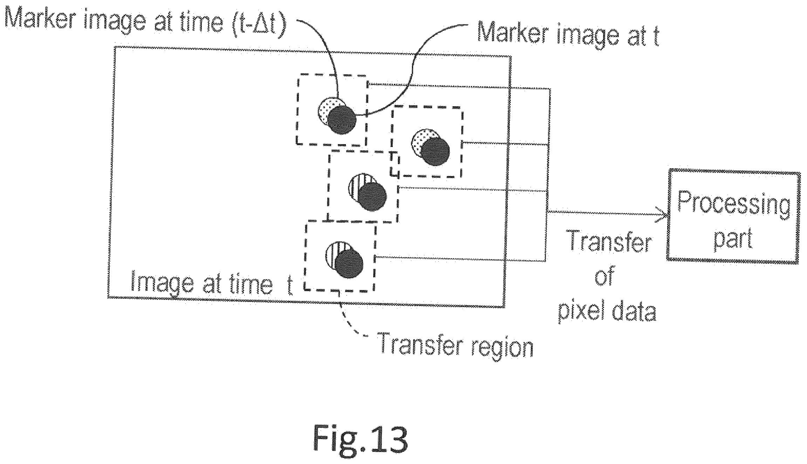

Specifically, as illustrated in Fig. 13, a maximum marker change amount Δx on a captured image during Δt is acquired beforehand. Only data of pixels in regions (The regions are illustrated with broken lines.) where each radius is Δx or shorter with respect to coordinates of marker images (The images are illustrated with shaded circles.) extracted from an image captured within a time (t - Δt) on an image captured at a time t is transferred to the processing part 14. With the configuration described above, marker images (The images are illustrated with black circles.) captured at the time t can exist in transfer regions rendered with the broken lines. Therefore, the processing part 14 can extract coordinates of the markers 12 at the time t from data being transferred.

The imaging part 13 performs the step of reducing image data, described above. However, the present invention is not limited to this example. In other words, in a specific configuration, the imaging device 3 or the PC 4 coupled to the imaging device 3 may perform the steps.

### [Seventh Embodiment]

The embodiment relates to data on an image captured with the markers 12, which is to be transferred from the imaging part 13 to the processing part 14.

In the embodiment, by reducing an amount of data on pixel values in an image captured by the imaging part 13, an amount of data to be transferred to the processing part 14 is reduced. As described above, when an amount of data to be transferred can be reduced, a time required to transfer the data and a time required to process the data can also be reduced, achieving high-speed processing and highly precise positioning.

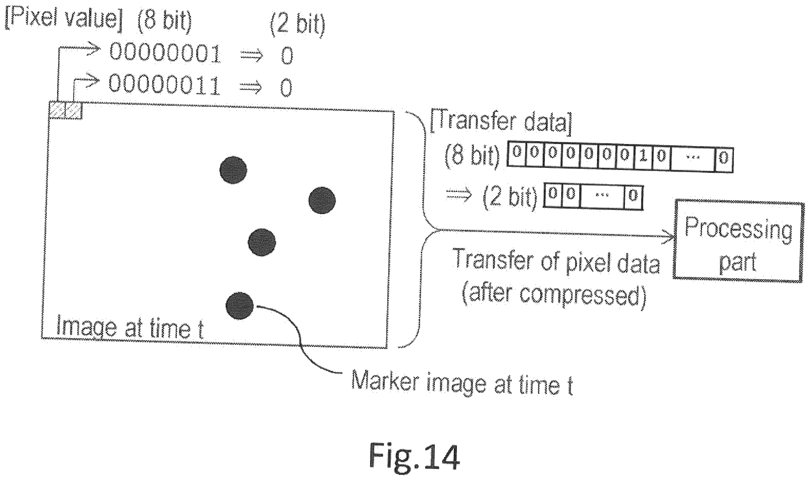

Specifically, as illustrated in Fig. 14, when a pixel value of data on an image being captured is expressed with eight bits, a threshold set beforehand is used to convert eight-bit data into two-bit data. For the threshold used here, such a value is acquired beforehand that can secure a certain degree of precision on positioning of the probe. With the configuration described above, a tone of an image being captured is lowered, so that an amount of data to be transferred can be reduced, achieving high-speed processing and highly precise positioning.

As described above, the present invention is not limited to a case when a threshold is set for a pixel value. A threshold may be provided for an amount of spatial or temporal change in a pixel value.

The imaging part 13 performs the step of reducing image data, described above. However, the present invention is not limited to this example. In other words, in a specific configuration, the imaging device 3 or the PC 4 coupled to the imaging device 3 may perform the steps.

## Claims

1. A three-dimensional shape measuring system (1) comprising:
a timing controller (10) configured to output a control signal for synchronization;
a non-contact three-dimensional shape measuring sensor (7) configured to measure in synchronization with the control signal, without coming into contact with a measurement target (6), a three-dimensional shape of the measurement target (6);
a probe (2) including the non-contact three-dimensional shape measuring sensor (7), the probe (2) being configured to be held at a position allowing, with respect to the measurement target (6), when the three-dimensional shape is to be measured, the non-contact three-dimensional shape measuring sensor (7) to measure a shape of the measurement target (6);
a plurality of markers (12, ...12) disposed on the probe (2), the plurality of markers (12, ...12) being configured to emit light in synchronization with the control signal;
a measurement setting part (15) configured to set an exposure time for imaging and a predetermined number of times of imaging;
an imaging part (13) configured to receive light during the exposure time to capture an image including the plurality of markers (12, ...12), the imaging part (13) being configured to obtain a plurality of images by capturing, when the non-contact three-dimensional shape measuring sensor (7) measures the three-dimensional shape of the measurement target (6), with the exposure time and in synchronization with the control signal, the image including the plurality of markers (12, ...12) the predetermined number of times;
a processing part (14) configured to extract positions of the plurality of markers (12, ...12) from the plurality of the images captured by the imaging part (13) to measure, based on information on a position relationship between the plurality of markers (12, ...12), a position and a posture of the probe (2) in a world coordinate system; and
a three-dimensional shape conversion processing part (9) configured to convert the three-dimensional shape measured by the non-contact three-dimensional shape measuring sensor (7) on the measurement target (6) in a probe coordinate system defined for the probe (2) into a three-dimensional shape of the measurement target (6) in the world coordinate system based on the position and the posture of the probe (2) at the time of the measurement of the three-dimensional shape by the non-contact three-dimensional shape measuring sensor (7), and to generate information indicative of the three-dimensional shape of the measurement target (6) in the world coordinate system,
wherein the measurement setting part (15) is configured to set the exposure time and the predetermined number of times by
setting a setting exposure time,
measuring the position and posture of the probe (2) a plurality of times by using the setting exposure time and capturing the image of the probe (2) the plurality of times,
obtaining a relationship between (i) measuring time and (ii) a position measurement error of the probe (2), including an error relating to a displacement of the probe (2) and an error that occurs regardless of the displacement, wherein the relationship is obtained by using, for each of a plurality of measuring times each represented by the setting exposure time and a different pattern of the plurality of times , corresponding results of the measuring of the position and posture of the probe (2), and
setting the setting exposure time as the exposure time and setting as the predetermined number of times the number of times at which the position measurement error is reduced, using the relationship.

2. The three-dimensional shape measuring system (1) according to claim 1, wherein, when the setting exposure time is to be set, the setting exposure time is set based on a pixel value of an image including the plurality of markers (12, ...12), the image being captured by the imaging part (13).

3. The three-dimensional shape measuring system (1) according to claim 2, wherein, in a case where the setting exposure time is to be set, an exposure time is set so as not to saturate a pixel value of an image including the plurality of markers (12, ...12), and after the imaging part (13) captures an image including the plurality of markers (12, ...12) with the set exposure time, the setting exposure time is set so that a maximum value of a pixel value of the image being captured to include the plurality of markers (12, ...12) falls within a range from 80% to 100% inclusive of a tone indicated by the pixel value.

4. The three-dimensional shape measuring system (1) according to any one of claims 1 to 3, wherein
the imaging part (13) is configured to assume, based on a past position of the probe (2) in an image being captured, a region allowing the markers (12, ...12) to exist when an image is captured, and to output the region to the processing part (14), and
the processing part (14) is configured to measure from data on an image of the region, a position and a posture of the probe (2).

5. The three-dimensional shape measuring system (1) according to any one of claims 1 to 4, wherein
the imaging part (13) is configured to reduce an amount of data on an image being captured, and to output the data to the processing part (14), and
the processing part (14) is configured to measure, from the data on the image, the data being reduced in amount, a position and a posture of the probe (2).

6. The three-dimensional shape measuring system (1) according to any one of claims 1 to 5, wherein the plurality of markers (12, ...12) are disposed at positions allowing a posture of the probe (2) to be determined uniquely, and disallowing the markers (12, ...12) to lie on a single plain surface.

7. The three-dimensional shape measuring system (1) according to claim 1, wherein the relationship is obtained for each of a plurality of setting exposure time, and one of the setting exposure times is set as the exposure time, and the number of times of imaging is set using the relationship corresponding to the setting exposure time set as the exposure time.

8. A measuring time setting method for a three-dimensional shape measuring system (1) including:
a probe (2) configured to measure a three-dimensional shape of a measurement target (6) in synchronization with a control signal;
a plurality of markers (12, ..., 12) provided on the probe (2), the plurality of markers (12, ..., 12) being configured to emit light in synchronization with the control signal; and
a non-contact probe positioning sensor (8) comprising:
(i) an imaging part (13) configured to receive light during an exposure time to capture an image, the imaging part (13) being configured to capture, in synchronization with the control signal, the image including the plurality of markers (12, ...12) a predetermined number of times; and
(ii) a processing part (14) configured to measure a position and a posture of the probe (2) based on the images captured the predetermined number of times with the exposure time for averaging the process of measuring the position and the posture of the probe (2), wherein
the measuring time setting method sets a measuring time, including the exposure time and the predetermined number of times, for measuring the position and the posture of the probe (2), by executing the following steps:
a first step of setting a setting exposure time for the imaging part (13);
a second step of measuring a position and a posture of the probe (2) a plurality of times;
a third step of calculating, in a plurality of patterns of the numbers of times, a position measurement error including an error due to position displacement of the probe (2) and an error that occurs regardless of position displacement;
a fourth step of calculating a correspondence relationship between measuring times for the probe (2) of the patterns of the number of times and the position measurement errors on the probe (2); and
a step of setting the setting exposure time as the exposure time and, based on the correspondence relationship, the number of times at which a corresponding one of the position measurement errors on the probe (2) is reduced as the predetermined number of times.

9. The measuring time setting method according to claim 8, wherein
the first, second, third, and fourth steps are repeated for all of setting exposure times being candidates to be set; and
in the step of setting, one of the setting exposure times is set as the exposure time.

10. The measuring time setting method according to claim 8, wherein, in the second step, a position and a posture of the probe (2) are measured while the probe (2) is fixed to a fixture.

11. The measuring time setting method according to claim 8, wherein, in the second step, a position and a posture of the probe (2) are measured while a user is holding the probe (2).

12. A computer program comprising instructions to cause a three-dimensional shape measuring system (1) to execute the method steps of claim 8, the three-dimensional shape measuring system (1) including:
a probe (2) configured to measure a three-dimensional shape of a measurement target (6) in synchronization with a control signal;
a plurality of markers (12, ..., 12) provided on the probe (2), the plurality of markers (12, ..., 12) being configured to emit light in synchronization with the control signal;
a computer device comprising a three-dimensional shape conversion processing part (9), a timing controller (10), and a processing part (14) including a measurement setting part (15); and
a non-contact probe positioning sensor (8) comprising:
(i) an imaging part (13) configured to receive light during an exposure time to capture an image, the imaging part (13) being configured to capture, in synchronization with the control signal, the image including the plurality of markers (12, ...12) a predetermined number of times; and
(ii) the processing part (14) configured to measure a position and a posture of the probe (2) based on the images captured the predetermined number of times with the exposure time for averaging the process of measuring the position and the posture of the probe (2).

## Patentansprüche

1. Ein Messsystem zur Messung dreidimensionaler Formen (1), umfassend:
eine Zeitsteuereinrichtung (10), die eingerichtet ist, ein Steuersignal für die Synchronisation auszugeben;
einen Messsensor (7) zur kontaktlosen Messung dreidimensionaler Formen, der eingerichtet ist, eine dreidimensionale Form des Messobjekts (6) in Synchronisation mit dem Steuersignal zu messen, ohne mit dem Messobjekt (6) in Kontakt zu kommen;
eine Sonde (2) mit dem Messsensor zur kontaktlosen Messung dreidimensionaler Formen (7), wobei die Sonde (2) eingerichtet ist, um in einer Position gehalten zu werden, die es dem Messsensor zur kontaktlosen Messung dreidimensionaler Formen (7) ermöglicht, in Bezug auf das Messobjekt (6) eine Form des Messobjekts (6) zu messen, wenn die dreidimensionale Form zu messen ist;
eine Vielzahl von Markierungen (12, ...12), die an der Sonde (2) angeordnet ist, wobei die Vielzahl von Markierungen (12, ...12) eingerichtet ist, um in Synchronisation mit dem Steuersignal Licht auszusenden;
einen Messeinstellteil (15), der eingerichtet, eine Belichtungszeit für die Bildgebung und eine vorgegebene Anzahl an Bildgebungen einzustellen;
einen Bildgebungsteil (13), der eingerichtet ist, dass er während der Belichtungszeit Licht empfängt, um ein Bild mit der Vielzahl von Markierungen (12, ...12) aufzunehmen, wobei der Bildgebungsteil (13) eingerichtet ist, dass er eine Vielzahl von Bildern erhält, indem er, wenn der Messsensor (7) zur kontaktlosen Messung dreidimensionaler Formen die dreidimensionale Form des Messobjekts (6) misst, mit der Belichtungszeit und in Synchronisation mit dem Steuersignal das Bild mit der Vielzahl von Markierungen (12, ...12) die vorbestimmte Anzahl von Malen aufnimmt;
einen Verarbeitungsteil (14), der eingerichtet ist, dass er Positionen der Mehrzahl von Markierungen (12, ...12) aus der Mehrzahl von Bildern extrahiert, die von dem Bildgebungsteil (13) aufgenommen wurden, um auf der Grundlage von Informationen über eine Positionsbeziehung zwischen der Mehrzahl von Markierungen (12, ...12) eine Position und eine Stellung der Sonde (2) in einem Weltkoordinatensystem zu messen; und
einen Teil (9) zur Konvertierungsverarbeitung einer dreidimensionalen Form, der eingerichtet ist, dass er die dreidimensionale Form, die von dem Messsensor zur kontaktlosen Messung dreidimensionaler Formen (7) an dem Messobjekt (6) in einem für die Sonde (2) definierten Sondenkoordinatensystem gemessen wird, in eine dreidimensionale Form des Messobjekts (6) in dem Weltkoordinatensystem auf der Grundlage der Position und der Stellung der Sonde (2) zum Zeitpunkt der Messung der dreidimensionalen Form durch den Messsensor zur kontaktlosen Messung dreidimensionaler Formen (7) umwandelt, und zum Erzeugen von Informationen, die die dreidimensionale Form des Messobjekts (6) in dem Weltkoordinatensystem anzeigen,
wobei der Messeinstellteil (15) eingerichtet ist, dass er die Belichtungszeit und die vorbestimmte Anzahl von Durchläufen einstellt, indem er
eine Einstellbelichtungszeit einstellt,
die Position und die Stellung der Sonde (2) eine Vielzahl von Malen misst, nämlich unter Verwendung der Einstellbelichtungszeit und indem er das Bild der Sonde (2) die Vielzahl von Malen aufnimmt,
eine Beziehung erhält zwischen (i) der Messzeit und (ii) einem Positionsmessfehler der Sonde (2), einschließlich eines Fehlers, der sich auf eine Verschiebung der Sonde (2) bezieht, und eines Fehlers, der unabhängig von der Verschiebung auftritt, wobei die Beziehung erhalten wird, indem für jede einer Vielzahl von Messzeiten, die jeweils durch die Einstellbelichtungszeit und ein unterschiedliches Muster der Vielzahl von Zeiten dargestellt werden, entsprechende Ergebnisse der Messung der Position und der Stellung der Sonde (2) verwendet werden, und
die Einstellbelichtungszeit als die Belichtungszeit einstellt und die vorbestimmte Anzahl von Durchläufen als die Anzahl von Durchläufen einstellt, für die der Positionsmessfehler reduziert wird, unter Verwendung der Beziehung.

2. Messsystem (1) zur Messung dreidimensionaler Formen gemäß Anspruch 1, wobei, wenn die Einstellbelichtungszeit eingestellt wird, die Einstellbelichtungszeit auf der Grundlage eines Pixelwerts eines Bildes mit der Vielzahl von Markierungen (12, ...12) eingestellt wird, wobei das Bild durch den Bildgebungsteil (13) erfasst wird.

3. Messsystem (1) zur Messung dreidimensionaler Formen nach Anspruch 2, wobei in einem Fall, in dem die Einstellbelichtungszeit einzustellen ist, eine Belichtungszeit so eingestellt wird, dass ein Pixelwert eines Bildes, das die Vielzahl von Markierungen (12, ...12) enthält, nicht gesättigt wird, und nachdem der Bildgebungsteil (13) ein Bild, das die Vielzahl von Markierungen (12, ..12) mit der eingestellten Belichtungszeit aufnimmt, wird die Einstellbelichtungszeit so eingestellt, dass ein Maximalwert eines Pixelwerts des Bildes, das aufgenommen wird, um die Vielzahl von Markierungen (12, ...12) aufzuweisen, in einen Bereich von 80 % bis einschließlich 100 % eines durch den Pixelwert angegebenen Tons fällt.

4. Messsystem (1) zur Messung dreidimensionaler Formen gemäß einem der Ansprüche 1 bis 3, wobei
der Bildgebungsteil (13) so konfiguriert ist, dass er auf der Grundlage einer vergangenen Position der Sonde (2) in einem aufgenommenen Bild einen Bereich annimmt, in dem die Markierungen (12, ...12) existieren können, wenn ein Bild aufgenommen wird, und den Bereich an den Verarbeitungsteil (14) ausgibt, und
der Verarbeitungsteil (14) eingerichtet ist, dass anhand von Daten über ein Bild des Bereichs eine Position und eine Stellung der Sonde (2) gemessen werden.

5. Messsystem (1) zur Messung dreidimensionaler Formen gemäß einem der Ansprüche 1 bis 4, wobei
der Bildgebungsteil (13) so konfiguriert ist, dass er eine Datenmenge über ein aufgenommenes Bild reduziert und die Daten an den Verarbeitungsteil (14) ausgibt, und
der Verarbeitungsteil (14) so konfiguriert ist, dass er aus den Daten über das Bild, wobei die Daten in ihrer Menge reduziert werden, eine Position und eine Stellung der Sonde (2) misst.

6. Messsystem (1) zur Messung dreidimensionaler Formen nach einem der Ansprüche 1 bis 5, **dadurch gekennzeichnet, dass** die mehreren Markierungen (12, ...12) an Positionen angeordnet sind, die eine eindeutige Bestimmung der Stellung der Sonde (2) ermöglichen und es nicht zulassen, dass die Markierungen (12, ...12) auf einer einzigen ebenen Fläche liegen.

7. Messsystem (1) zur Messung dreidimensionaler Formen nach Anspruch 1, wobei die Beziehung für jede von mehreren Einstellbelichtungszeiten erhalten wird und eine der Einstellbelichtungszeiten als die Belichtungszeit eingestellt wird und die Anzahl der Bilderzeugungen unter Verwendung der Beziehung entsprechend der als Belichtungszeit eingestellten Einstellbelichtungszeit eingestellt wird.

8. Messzeiteinstellungsverfahren für ein Messsystem (1) zur Messung dreidimensionaler Formen, das Folgendes umfasst:
eine Sonde (2), die eingerichtet ist, dass sie eine dreidimensionale Form eines Messobjekts (6) in Synchronisation mit einem Steuersignal misst;
eine Vielzahl von Markierungen (12, ...12), die auf der Sonde (2) vorgesehen ist, wobei die Vielzahl von Markierungen (12, ...12) eingerichtet ist, um in Synchronisation mit dem Steuersignal Licht auszusenden; und
einen berührungslosen Sondenpositionierungssensor (8), der Folgendes umfasst:
(i) (i) einen Bildgebungsteil (13), der so konfiguriert ist, dass er während einer Belichtungszeit Licht empfängt, um ein Bild aufzunehmen, wobei der Bildgebungsteil (13) so konfiguriert ist, dass er in Synchronisation mit dem Steuersignal das Bild, das die Vielzahl von Markierungen (12, ...12) enthält, eine vorbestimmte Anzahl von Malen aufnimmt; und
(ii) einen Verarbeitungsteil (14), der eingerichtet ist, dass er eine Position und eine Stellung der Sonde (2) auf der Grundlage der Bilder misst, die die vorbestimmte Anzahl an Durchläufen mit der Belichtungszeit aufgenommen wurden, zur Mittelwertbildung des Prozesses zur Messung der Position und der Stellung der Sonde (2), wobei
das Messzeiteinstellungsverfahren eine Messzeit, einschließlich der Belichtungszeit und der vorbestimmten Anzahl von Malen, einstellt, um die Position und die Stellung der Sonde (2) zu messen, indem es die folgenden Schritte ausführt:
einen ersten Schritt, um eine Einstellbelichtungszeit für den Bildgebungsteil (13) einzustellen;
einen zweiten Schritt, in dem eine Position und eine Stellung der Sonde (2) mehrmals gemessen wird;
einen dritten Schritt der Berechnung eines Positionsmessfehlers in einer Vielzahl von Mustern der Anzahl von Malen, einschließlich eines Fehlers aufgrund einer Positionsverschiebung der Sonde (2) und eines Fehlers, der unabhängig von der Positionsverschiebung auftritt;
einen vierten Schritt der Berechnung einer Korrespondenzbeziehung zwischen den Messzeiten für die Sonde (2) der Muster der Anzahl von Malen und der Positionsmessfehler an der Sonde (2); und
einen Schritt des Einstellens der Einstellbelichtungszeit als die Belichtungszeit und, basierend auf der Korrespondenzbeziehung, der Anzahl von Malen, bei denen ein entsprechender der Positionsmessfehler an der Sonde (2) reduziert wird, als die vorbestimmte Anzahl von Malen.

9. Messzeiteinstellungsverfahren gemäß Anspruch 8, wobei
der erste, zweite, dritte und vierte Schritt für alle einzustellenden Belichtungszeiten wiederholt werden; und
im Schritt des Einstellens, eine der Einstellbelichtungszeitenals Belichtungszeit eingestellt wird.

10. Messzeiteinstellungsverfahren gemäß Anspruch 8, wobei im zweiten Schritt eine Position und eine Stellung der Sonde (2) gemessen werden, während die Sonde (2) an einer Halterung befestigt ist.

11. Messzeiteinstellungsverfahren gemäß Anspruch 8, wobei im zweiten Schritt eine Position und eine Stellung der Sonde (2) gemessen werden, während ein Benutzer die Sonde (2) hält.

12. Computerprogramm, das Anweisungen enthält, um ein Messsystem (1) zur Messung dreidimensionaler Formen zu veranlassen, die Verfahrensschritte von Anspruch 8 auszuführen, wobei das dreidimensionale Formmesssystem (1) enthält:
eine Sonde (2), die eingerichtet ist, dass sie eine dreidimensionale Form eines Messobjekts (6) in Synchronisation mit einem Steuersignal misst;
eine Vielzahl von Markierungen (12, ...12), die auf der Sonde (2) vorgesehen ist, wobei die Vielzahl von Markierungen (12, ...12) eingerichtet ist, dass sie Licht in Synchronisation mit dem Steuersignal aussendet;
eine Computervorrichtung, die einen Teil (9) zur Konvertierungsverarbeitung einer dreidimensionalen Form, eine Zeitsteuerung (10) und einen Verarbeitungsteil (14) mit einem Messeinstellteil (15) umfasst; und
einen berührungslosen Sondenpositionierungssensor (8), der Folgendes umfasst:
(i) einen Bildgebungsteil (13), der so konfiguriert ist, dass er während einer Belichtungszeit Licht empfängt, um ein Bild aufzunehmen, wobei der Bildgebungsteil (13) so konfiguriert ist, dass er in Synchronisation mit dem Steuersignal das Bild, das die Vielzahl von Markierungen (12, ...12) enthält, eine vorbestimmte Anzahl von Malen aufnimmt; und
(ii) der Verarbeitungsteil (14), der so konfiguriert ist, dass er eine Position und eine Stellung der Sonde (2) auf der Grundlage der Bilder misst, die die vorbestimmte Anzahl von Malen mit der Belichtungszeit aufgenommen wurden, um den Prozess der Messung der Position und der Stellung der Sonde (2) zu mitteln.

## Revendications

1. Système de mesure de forme tridimensionnelle (1) comprenant :
un dispositif de commande de temporisation (10) configuré pour fournir un signal de commande pour la synchronisation ;
un capteur de mesure de forme tridimensionnelle sans contact (7) configuré pour mesurer en synchronisation avec le signal de commande, sans entrer en contact avec une cible de mesure (6), une forme tridimensionnelle de la cible de mesure (6) ;
une sonde (2) comportant le capteur de mesure de forme tridimensionnelle sans contact (7), la sonde (2) étant configurée pour être maintenue à une position par rapport à la cible de mesure (6) permettant au capteur de mesure de forme tridimensionnelle sans contact (7) de mesurer une forme de la cible de mesure (6) lorsque la forme tridimensionnelle doit être mesurée ;
une pluralité de marqueurs (12, ...12) disposés sur la sonde (2), la pluralité de marqueurs (12, ...12) étant configurés pour émettre de la lumière en synchronisation avec le signal de commande ;
une partie de réglage de mesure (15) configurée pour régler un temps d'exposition pour l'imagerie et un nombre prédéterminé de fois d'imagerie ;
une partie d'imagerie (13) configurée pour recevoir de la lumière pendant le temps d'exposition pour capturer une image comportant la pluralité de marqueurs (12, ... 12), la partie d'imagerie (13) étant configurée pour obtenir une pluralité d'images en capturant l'image comportant la pluralité de marqueurs (12, ...12) le nombre prédéterminé de fois lorsque le capteur de mesure de forme tridimensionnelle sans contact (7) mesure la forme tridimensionnelle de la cible de mesure (6) avec le temps d'exposition et en synchronisation avec le signal de commande ;
une partie de traitement (14) configurée pour extraire des positions de la pluralité de marqueurs (12, ...12) à partir de la pluralité d'images capturées par la partie d'imagerie (13) pour mesurer, sur la base d'informations sur une position entre la pluralité de marqueurs (12, ...12), une position et une posture de la sonde (2) dans un système de coordonnées mondiales ; et
une partie de traitement de conversion de forme tridimensionnelle (9) configurée pour convertir la forme tridimensionnelle, mesurée par le capteur de mesure de forme tridimensionnelle sans contact (7) sur la cible de mesure (6) dans un système de coordonnées de sonde défini pour la sonde (2), en une forme tridimensionnelle de la cible de mesure (6) dans le système de coordonnées mondiales, sur la base de la position et de la posture de la sonde (2) au temps de la mesure de la forme tridimensionnelle par le capteur de mesure de forme tridimensionnelle sans contact (7), et pour générer des informations indicatives de la forme tridimensionnelle de la cible de mesure (6) dans le système de coordonnées mondiales,
dans lequel la partie de réglage de mesure (15) est configurée pour régler le temps d'exposition et le nombre prédéterminé de fois
en réglant un temps d'exposition de réglage,
en mesurant la position et la posture de la sonde (2) une pluralité de fois en utilisant le temps d'exposition de réglage et en capturant l'image de la sonde (2) la pluralité de fois,
en obtenant une relation entre (i) un temps de mesure et (ii) une erreur de mesure de position de la sonde (2) comportant une erreur relative à un déplacement de la sonde (2) et une erreur qui se produit indépendamment du déplacement, dans lequel la relation est obtenue en utilisant, pour chacun d'une pluralité de temps de mesure représentés chacun par le temps d'exposition de réglage et un motif différent de la pluralité de fois, des résultats correspondant de la mesure de la position et de la posture de la sonde (2), et
en définissant le temps d'exposition de réglage comme temps d'exposition, et en réglant, comme nombre prédéterminé de fois, le nombre de fois où l'erreur de mesure de position est réduite, en utilisant la relation.

2. Système de mesure de forme tridimensionnelle (1) selon la revendication 1, dans lequel, lorsque le temps d'exposition de réglage doit être réglé, le temps d'exposition de réglage est réglé sur la base d'une valeur de pixel d'une image comportant la pluralité de marqueurs (12, ...12), l'image étant capturée par la partie d'imagerie (13).

3. Système de mesure de forme tridimensionnelle (1) selon la revendication 2, dans lequel, dans un cas où le temps d'exposition de réglage doit être réglé, un temps d'exposition est réglé de façon à ne pas saturer une valeur de pixel d'une image comportant la pluralité de marqueurs (12, ...12), et après que la partie d'imagerie (13) a capturé une image comportant la pluralité de marqueurs (12, ...12) avec le temps d'exposition réglé, le temps d'exposition de réglage est réglé de sorte qu'une valeur maximale d'une valeur de pixel de l'image en cours de capture devant inclure la pluralité de marqueurs (12, ...12) se situe dans une plage de 80 % à 100 % inclus d'un ton indiqué par la valeur de pixel.

4. Système de mesure de forme tridimensionnelle (1) selon l'une quelconque des revendications 1 à 3, dans lequel la partie d'imagerie (13) est configurée pour supposer, sur la base d'une position passée de la sonde (2) dans une image en cours de capture, une région permettant aux marqueurs (12, ...12) d'exister lorsqu'une image est capturée, et pour fournir la région à la partie de traitement (14), et
la partie de traitement (14) est configurée pour mesurer une position et une posture de la sonde (2) à partir de données sur une image de la région.

5. Système de mesure de forme tridimensionnelle (1) selon l'une quelconque des revendications 1 à 4, dans lequel
la partie d'imagerie (13) est configurée pour réduire une quantité de données sur une image en cours de capture, et pour fournir les données à la partie de traitement (14), et
la partie de traitement (14) est configurée pour mesurer une position et une posture de la sonde (2) à partir des données sur l'image, les données étant réduites en quantité.

6. Système de mesure de forme tridimensionnelle (1) selon l'une quelconque des revendications 1 à 5, dans lequel la pluralité de marqueurs (12, ...12) sont disposés à des positions permettant de déterminer de manière unique une posture de la sonde (2), et empêchant les marqueurs (12, ...12) de reposer sur une seule surface plane.

7. Système de mesure de forme tridimensionnelle (1) selon la revendication 1, dans lequel la relation est obtenue pour chacun d'une pluralité de temps d'exposition de réglage, et un des temps d'exposition de réglage est réglé comme temps d'exposition, et le nombre de fois d'imagerie est réglé en utilisant la relation correspondant au temps d'exposition de réglage réglé comme temps d'exposition.

8. Procédé de réglage de temps de mesure pour un système de mesure de forme tridimensionnelle (1) comportant :
une sonde (2) configurée pour mesurer une forme tridimensionnelle d'une cible de mesure (6) en synchronisation avec un signal de commande ;
une pluralité de marqueurs (12, ..., 12) prévus sur la sonde (2), la pluralité de marqueurs (12, ..., 12) étant configurés pour émettre de la lumière en synchronisation avec le signal de commande ; et
un capteur de positionnement de sonde sans contact (8) comprenant :
(i) une partie d'imagerie (13) configurée pour recevoir de la lumière pendant un temps d'exposition pour capturer une image, la partie d'imagerie (13) étant configurée pour capturer, en synchronisation avec le signal de commande, l'image comportant la pluralité de marqueurs (12, ...12) un nombre prédéterminé de fois ; et
(ii) une partie de traitement (14) configurée pour mesurer une position et une posture de la sonde (2) sur la base des images capturées le nombre prédéterminé de fois avec le temps d'exposition, pour faire la moyenne du processus de mesure de la position et de la posture de la sonde (2), dans lequel
le procédé de réglage de temps de mesure règle un temps de mesure, comportant le temps d'exposition et le nombre prédéterminé de fois, pour mesurer la position et la posture de la sonde (2), en exécutant les étapes suivantes :
une première étape de réglage d'un temps d'exposition de réglage pour la partie d'imagerie (13) ;
une deuxième étape de mesure d'une position et d'une posture de la sonde (2) une pluralité de fois ;
une troisième étape de calcul, dans une pluralité de motifs de nombres de fois, d'une erreur de mesure de position comportant une erreur due à un déplacement de la sonde (2) et une erreur qui se produit indépendamment du déplacement de position ;
une quatrième étape de calcul d'une relation de correspondance entre des temps de mesure pour la sonde (2) des motifs du nombre de fois et les erreurs de mesure de position sur la sonde (2) ; et
une étape de réglage du temps d'exposition de réglage comme temps d'exposition et, sur la base de la relation de correspondance, du nombre de fois, où une erreur correspondante des erreurs de mesure de position sur la sonde (2) est réduite, comme nombre prédéterminé de fois.

9. Procédé de réglage de temps de mesure selon la revendication 8, dans lequel
les première, deuxième, troisième et quatrième étapes sont répétées pour tous les temps d'exposition de réglage qui sont des candidats à régler ; et
à l'étape de réglage, un des temps d'exposition de réglage est réglé comme temps d'exposition.

10. Procédé de réglage de temps de mesure selon la revendication 8, dans lequel, à la deuxième étape, une position et une posture de la sonde (2) sont mesurées tandis que la sonde (2) est fixée à un dispositif de fixation.

11. Procédé de réglage de temps de mesure selon la revendication 8, dans lequel, à la deuxième étape, une position et une posture de la sonde (2) sont mesurées tandis qu'un utilisateur maintient la sonde (2).

12. Programme informatique comprenant des instructions pour amener un système de mesure de forme tridimensionnelle (1) à exécuter les étapes du procédé de la revendication 8, le système de mesure de forme tridimensionnelle (1) comportant :
une sonde (2) configurée pour mesurer une forme tridimensionnelle d'une cible de mesure (6) en synchronisation avec un signal de commande ;
une pluralité de marqueurs (12, ..., 12) prévus sur la sonde (2), la pluralité de marqueurs (12, ..., 12) étant configurés pour émettre de la lumière en synchronisation avec le signal de commande ;
un dispositif informatique comprenant une partie de traitement de conversion de forme tridimensionnelle (9), un dispositif de commande de temporisation (10), et une partie de traitement (14) comportant une partie de réglage de mesure (15) ; et
un capteur de positionnement de sonde sans contact (8) comprenant :
(i) une partie d'imagerie (13) configurée pour recevoir de la lumière pendant un temps d'exposition pour capturer une image, la partie d'imagerie (13) étant configurée pour capturer, en synchronisation avec le signal de commande, l'image comportant la pluralité de marqueurs (12, ...12) un nombre prédéterminé de fois ; et
(ii) la partie de traitement (14) configurée pour mesurer une position et une posture de la sonde (2) sur la base des images capturées, le nombre prédéterminé de fois avec le temps d'exposition pour faire la moyenne du processus de mesure de la position et de la posture de la sonde (2).
